Europäisches Patentamt

European Patent Office

Office européen des brevets

(19)

(11) **EP 0 921 296 B1**

(12) **EUROPEAN PATENT SPECIFICATION**

(45) Date of publication and mention
of the grant of the patent:
**06.05.2004 Bulletin 2004/19**

(51) Int Cl.⁷: **F02D 41/40**, F02D 41/14

(21) Application number: **98123232.5**

(22) Date of filing: **07.12.1998**

(54) **A fuel injection control device for an internal combustion engine**

Kraftstoffeinspritzsteuerungsvorrichtung für eine Brennkraftmaschine

Dispositif de commande d'injection de carburant pour moteur à combustion interne

(84) Designated Contracting States:
**DE FR GB**

(30) Priority: **08.12.1997 JP 33712897**

(43) Date of publication of application:
**09.06.1999 Bulletin 1999/23**

(73) Proprietor: **TOYOTA JIDOSHA KABUSHIKI
KAISHA
Aichi-ken 471-8571 (JP)**

(72) Inventor: **Fukuma, Takao
Toyota-shi, Aichi-ken 471-8571 (JP)**

(74) Representative:
**Pellmann, Hans-Bernd, Dipl.-Ing. et al
Patentanwaltsbüro
Tiedtke-Bühling-Kinne & Partner
Bavariaring 4-6
80336 München (DE)**

(56) References cited:
US-A- 4 841 936          US-A- 5 582 152
US-A- 5 647 317

• PATENT ABSTRACTS OF JAPAN vol. 012, no.
182 (M-702), 27 May 1988 (1988-05-27) & JP 62
291452 A (NIPPON SOKEN INC), 18 December
1987 (1987-12-18)
• PATENT ABSTRACTS OF JAPAN vol. 011, no.
380 (M-650), 11 December 1987 (1987-12-11) & JP
62 150052 A (TOYOTA MOTOR CORP), 4 July
1987 (1987-07-04)

**Description**

TECHNICAL FIELD

The present invention relates to a fuel injection control device for an internal combustion engine, and particularly, to a fuel injection control device which is capable of reducing the combustion noise of an internal combustion engine.

BACKGROUND ART

In an internal combustion engine such as a diesel engine, diesel knock occurs. Diesel knock is a phenomenon which causes combustion noise to increase. When the rate of pressure rise in the cylinder of the engine becomes excessively large due to, for example, a delay in ignition of the fuel, resonance in the combustion gas occurs. This causes sudden increase in combustion noise, i.e., diesel knock.

It is generally known that the increase in combustion noise occurs under conditions where the ignition of fuel is delayed, such as in a cold start of the engine. Further, in a transient operating condition of the engine, the increase in combustion noise may occur due to delays in the changes in the temperatures of intake air and combustion chambers of the engine. Further, in an engine using a high pressure fuel injection, since combustion speed increases due to high fuel injection pressure, an increase in combustion noise may occur.

It is known in the art that a pilot fuel injection which injects a small amount of fuel in the cylinder prior to the main fuel injection is effective for preventing the increase in combustion noise. Since fuel injected in the pilot fuel injection burns before the main fuel injection is performed, the delay in the ignition of the fuel injected by the main fuel injection is reduced and, thereby, the increase in combustion noise is suppressed.

An example of the method for reducing combustion noise by performing the pilot fuel injection is disclosed, for example, in Japanese Unexamined Patent Publication (Kokai) No. 62-291452.

In the method of the '452 publication, a knock sensor is disposed on the cylinder block of an internal combustion engine in order to detect peak values of knocks (combustion noises) of the respective cylinders of the engine. The method reduces combustion noise of each cylinder by correcting the amount of pilot fuel injection of each cylinder so that the peak value of knock in each cylinder is minimized. By controlling the amount of pilot fuel injection in such a manner that the peak value of the combustion noises of the respective cylinders is minimized, combustion noises in the respective cylinders are reduced uniformly regardless of differences in the various conditions in the cylinders.

However, in the method of the '452 publication, since the amounts of the pilot fuel injections are adjusted so that the peak values of the noises of the respective cylinders are minimized, the amounts of the pilot fuel injection in the respective cylinders are adjusted to different values although the amounts of the main fuel injection in the respective cylinders are controlled at a same value corresponding to the load condition of the engine.

Therefore, the total amount of fuel supplied to the cylinder (i.e., the sum of the amount of the pilot fuel injection and the amount of the main fuel injection) becomes different in each cylinder in the method of the '452 publication. Thus, though combustion noises of the respective cylinders may be reduced in the method of the '452 publication, the variation of the torque generated by the respective cylinders occurs. Especially when a high pressure fuel injection system is used, since the proportion of the amount of the pilot fuel injection relative to the amount of the main fuel injection is large, the variation of torque generated by the respective cylinders becomes large.

Document US-A-5 647 317 discloses a method for a comprehensive integrated control of a compression-ignition internal combustion engine having integral fuel pump-injectors utilizing an electronic control unit. The control strategy integrates various functions of engine control including fuel delivery, cooling fan control, engine speed governing and overspeed protection, engine braking, torque control and vehicle speed diagnostics and control. Cooling fan control is integrated with vehicle speed diagnostics and control as well as fuel delivery to provide an integrated cruise control function which incorporates engine braking. The method also includes improved control over the various engine speed governors while improving idle quality by balancing the power delivered by each of the engine cylinders when idle. The integrated torque control employs functions to reduce NOx emissions and noise utilizing adaptive fuel delivery timing and a split injection strategy, which includes lowering/increasing the main fuel injection amount so as to compensate for on increase/decrease in the torque change caused by a change of the pilot fuel amount.

DISCLOSURE OF INVENTION

In view of the problems in the related art as set forth above, the object of the present invention is to provide a fuel injection control device for an internal combustion engine which is capable of reducing combustion noises in the cylinders of the engine without causing the variation of torque of the cylinders. The object is achieved by a fuel injection device according to claim 1.

According to the present invention, since the amounts of the main fuel injections in the respective cylinders are adjusted in accordance with the amounts of the pilot fuel injections in the respective cylinders, the total amounts of the pilot fuel injection and the main fuel injection of each cylinder can be kept at the same, uniform value. Therefore, the torques generated by the respective cylinders becomes the same and a variation of torque in the respective cylinders can be prevented.

## BRIEF DESCRIPTION OF THE DRAWINGS

The present invention will be better understood from the description as set forth hereinafter, with reference to the accompanying drawings in which:

Fig. 1 schematically illustrates the general configuration of a comparative example of the fuel injection control device not part of the present invention when it is applied to an automobile diesel engine;

Fig. 2 is a flowchart illustrating a comparative example of the detecting operation of combustion noise not part of the invention;

Figs. 3 and 4 are a flowchart illustrating a comparative example of the fuel injection amount calculating operation of the engine in Fig. 1;

Fig. 5 is a flowchart illustrating an inventive embodiment of the detecting operation of torque generated by the cylinders; and

Figs. 6 and 7 are a flowchart illustrating another inventive embodiment of the fuel injection amount calculating operation of the engine which is different from the operation in Figs. 3 and 4.

## DESCRIPTION OF THE PREFERRED EMBODIMENT

Hereinafter, embodiments of the present invention will be explained in detail with reference to the accompanying drawings.

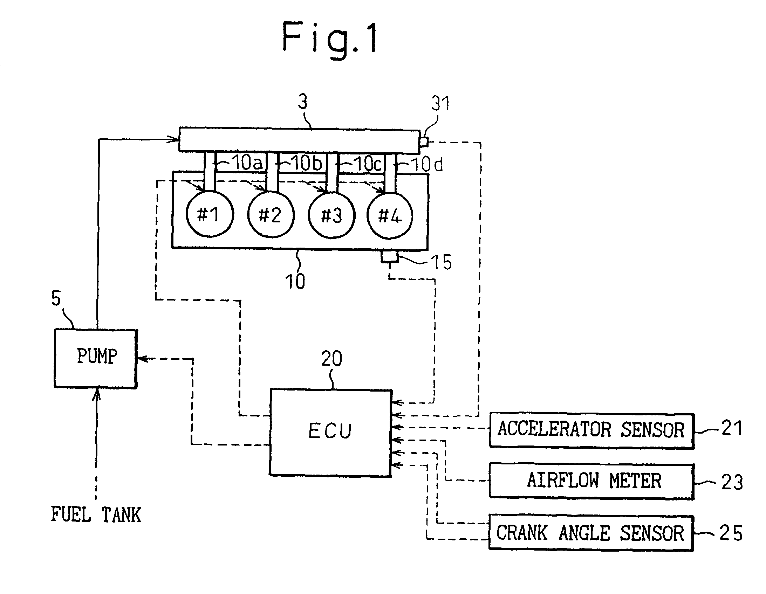

Fig. 1 shows a general configuration of a comparative example when it is applied to an automobile diesel engine.

In Fig. 1, reference numeral 1 designates an internal combustion engine (in this embodiment, a four-cylinder four-cycle diesel engine having No. 1 to No. 4 cylinders is used). Numerals 10a to 10d designate fuel injection valves which inject fuel directly into the cylinders No. 1 to No. 4, respectively. The fuel injection valves 10a to 10d are all connected to a common reservoir (a common rail) 3. High pressure fuel is supplied from a high pressure fuel injection pump 5 to the common rail 3 and injected to the respective cylinders through the fuel injection valves 10a to 10d.

In this comparative example, the high pressure fuel injection pump 5 is, for example, a plunger type high pressure pump equipped with a variable capacity control mechanism and pressurizes low pressure fuel supplied from a fuel tank (not shown) to a predetermined pressure before supplying it to the common rail.

In Fig. 1, numeral 20 is an electronic control unit (ECU) for controlling the engine 10. The ECU 20 may be constructed as a microcomputer of a known type including a read-only memory (ROM), a random-access memory (RAM), a microprocessor (CPU) and input/output ports all connected to each other by a bi-directional bus. The ECU 20 performs basic controls of the engine 10 such as a fuel injection pressure control which adjusts the fuel pressure in the common rail in accordance with the engine load and speed by controlling the capacity of the high pressure fuel pump 5 and a fuel injection control which adjusts the amount of fuel injected into the respective cylinders of the engine 10 by controlling the opening periods of the fuel injection valves 10a to 10d.

Further, the ECU 20 in this comparative example performs a noise suppression control in which pilot fuel injection is carried out through the fuel injection valves 10a to 10d prior to the main fuel injection in order to reduce combustion noise of the engine 10.

In order to perform these controls, a voltage signal corresponding to the pressure of the fuel in the common rail 3 is supplied to the input port of the ECU 20 from a fuel pressure sensor 31 disposed on the common rail 3 via an AD converter (not shown). An accelerator signal, which represents the amount of depression of an accelerator pedal by the operator of the automobile, is also supplied to the input port of the ECU 20 via the AD converter from an accelerator sensor 21 disposed near the accelerator pedal (not shown). Further, an intake air amount signal, which represents the amount of air drawn into the engine is supplied to the input port of the ECU 20 via the AD converter from an airflow meter 23 disposed on an intake air passage (not shown) of the engine 10.

Further, a crank angle sensor 25 is provided in this comparative example and supplies crank angle signals to the input port of the ECU 20. In this comparative example the crank angle sensor 25 is actually composed of two sensors. One is a reference position sensor disposed near a camshaft of the engine and generates a reference pulse signal every 720 degree rotation of the crankshaft of the engine, and another is a rotation angle sensor disposed near the crankshaft and generates a rotating pulse signal at a predetermined angle of rotation (for example, 15 degrees) of the crankshaft. These crank angle signals, i.e., the reference pulse signal and the rotating pulse signal are also supplied to the input port of the ECU 20. The ECU 20 calculates the rotation speed and the rotation phase of the crankshaft (the crank angle) based on the intervals of the rotation pulse signal and the number of the pulse received after the reference pulse signal was generated, respectively.

Further, a combustion noise sensor 15 is provided in order to detect combustion noise of the engin 10. The combustion noise sensor 15 in this comparative example is a knock sensor (a vibration detector) which is adjusted to detect the amplitude of the components of the vibration of the cylinder block of the engine having frequencies indicating a diesel knock (for example, 2 to 3 kHz). Other type sensors, such as an acoustic sensor disposed in the engine room and adjusted to detect the sound pressure of the components of the engine sound having frequencies indicating a diesel knock, may be used for the combustion noise sensor 15.

The output of the combustion noise sensor 15 is fed to the input port of the ECU 20 through an AD converter and a peak-hold circuit (not shown). The ECU 20 determines the expansion strokes of the respective cylinders No. 1 to No. 4 in accordance with the rotation phase of the crank shaft (the crank angle) and detects the peak values of the output of the combustion noise sensor 15 during the expansion strokes of the respective cylinders using the peak-hold circuit.

The output port of the ECU 20 is connected to the fuel injection valves 10a to 10d and the high pressure fuel injection pump 5 through the respective drive circuits (not shown).

In this comparative example, the ECU 20 calculates a target value of the fuel pressure in the common rail 3 based on the engine load (the accelerator signal) and the engine speed using a predetermined relationship stored in the ROM of the ECU 20. Further, the ECU 20 controls the discharge capacity of the pump 5 in such a manner that the actual common rail pressure detected by the fuel pressure sensor 31 agrees with the calculated target value. The fuel pressure in the common rail is adjusted in accordance with the engine load and speed and raised up to 150 MPa in some operating conditions of the engine. The ECU 20 also calculates a basic fuel injection amount $Q_{bse}$ based on the engine load, the engine speed and the intake air amount of the engine using a predetermined relationship stored in the ROM of the ECU 20.

Next, the combustion noise suppression control will be explained.

In this comparative example, the ECU the maximum values (the peak values) $Vpeak_i$ (i represents the cylinder number, i.e., i = 1, 2, 3, 4 in this embodiment) of the combustion noises of the respective cylinders of the engine based on the output of the combustion noise sensor 15 during the expansion strokes of the respective cylinders. The ECU 20 further calculates background noises $BG_i$ (i = 1, 2, 3, 4) of the respective cylinders by a smoothing calculation using a smoothing factor K (i.e., by obtaining a weighted mean value of the background noise BGi last calculated and the peak value $Vpeak_i$ detected this time using a weighting factor K).

Namely, the background noises $BG_i$ of the respective cylinders in this comparative example are obtained by the following formula.

$$BG_i = \{(K-1) \times BG_i + Vpeak_i\}/K$$

(K is a constant)

Nondimensional noise values $NVACT_i$ of the respective cylinders which are used in the noise suppression control are obtained by the following formula.

$$NVACT_i = Vpeak_i/BG_i$$

As explained before, the ECU 20 calculates the basic fuel injection amount $Q_{bse}$ in accordance with the accelerator signal (the amount of depression of the accelerator pedal) TA, the engine speed NE and the intake air amount G. The ECU 20 determines a basic pilot fuel injection amount $QP_{bse}$ and the target noise values $NVTRG_i$ (i = 1, 2, 3, 4) of the respective cylinders based on the basic fuel injection amount $Q_{bse}$ and the engine speed NE. The ECU 20 further obtains the actual pilot fuel injection amounts $QP_i$ of the respective cylinders by correcting the basic pilot fuel injection amount $QP_{bse}$ in accordance with the differences $\Delta NV_i$ between the noise values $NVACT_i$ and the target noise values $NVTRG_i$ of the respective cylinders (i.e., $\Delta NV_i = NVACT_i - NVTRG_i$). It should be noted that the actual pilot fuel injection amounts $QP_i$ are determined so that the noise values $NVACT_i$ approaches to the target noise values $NVTRG_i$, i.e., the actual pilot fuel injection amounts $QP_i$ calculated by the ECU 20 need not make the noise values $NVACT_i$ of the respective cylinders minimum. In general, when the pilot fuel injection amount $QP_i$ is adjusted so that the combustion noise becomes the minimum, the exhaust emission deteriorates in some cases. In this comparative example the target noise values $NVTRG_i$ is the minimum noise values of the respective cylinders under various engine load conditions which do not cause deterioration of the exhaust gas emission. The target noise values $NVTRG_i$ were determined previously by operating the actual engine under various load conditions and are stored in the ROM of the ECU 20.

Since the pilot fuel injection amounts $QP_i$ of the respective cylinders are determined in the manner explained above, the pilot fuel injection amounts $QP_i$ of the respective cylinders are set at different values in this embodiment. Therefore, if the main fuel injection amounts $QM_i$ of the respective cylinders are set at a same value, the total fuel injection amounts $(QP_i + QM_i)$ of the respective cylinders become different. This causes the variation of the output torque of the respective cylinders. In order to prevent the variation of the output torque of the cylinders, the main fuel injection amounts $QM_i$ of the respective cylinders are corrected in accordance with the calculated pilot fuel injection amount $QP_i$ of the respective cylinders in this embodiment in such a manner the total fuel injection amounts $(QP_i + QM_i)$ of the respective cylinders become a same value. Namely, the main fuel injection amounts $QM_i$ of the respective cylinders are determined by the calculated pilot fuel injection amounts $QP_i$ by $QM_i = Q_{bse} - QP_i$. By adjusting the main fuel injection amount $QM_i$, based on the calculated $QP_i$ in such a manner that the total fuel injection amounts $(QM_i + QP_i)$ of the respective cylinders become the same value, combustion noises of the respective cylinders can be suppressed without causing the variation of the torque in the cylinders.

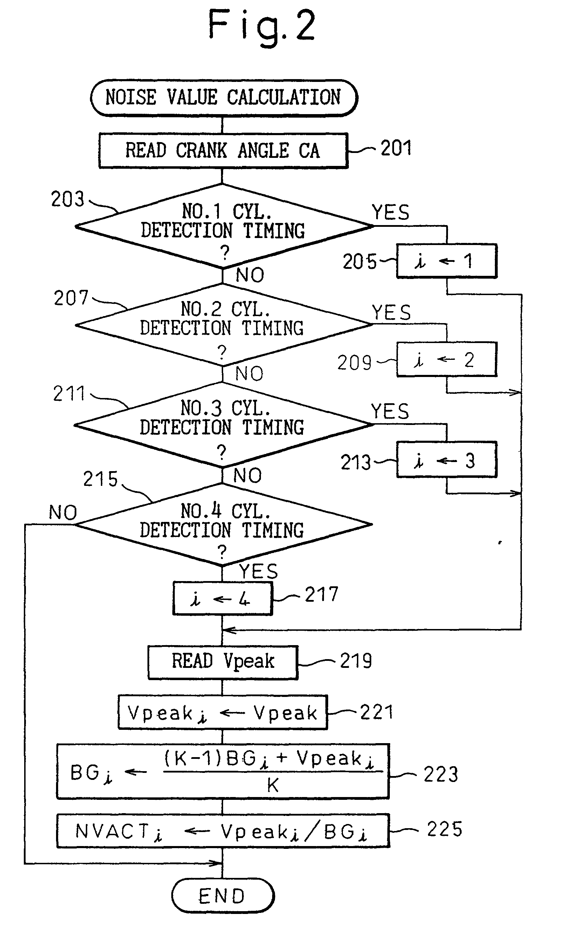

Fig. 2 and Figs. 3, 4 show flowcharts explaining an embodiment of the noise suppression control as explained above. The operations in flowcharts of Fig. 2 and Figs. 3, 4 are performed by routines executed by the ECU 20 at regular intervals.

Fig. 2 illustrates the calculating operation of the noise values $NVACT_i$ of the respective cylinders of the engine 10.

In Fig. 2, steps 201 through 217 represent the determination of the timing for detecting the peak values $Vpeak_i$ of the respective cylinders. The peak values $Vpeak_i$ in this embodiment are given by the output of the peak-hold circuit at the timing set in accordance with the respective cylinders (for example, about 90 degree crankshaft rotation after top dead centers of the expansion strokes of the respective cylinders). At step 201, the operation reads the crank angle CA and, at steps 203 through 217, determines whether the crank angle CA agrees with the timing for detecting the peak value of any of the cylinders No. 1 to No. 4. If the crank angle CA agrees with the timing for detecting the peak value of any of the cylinders, the value of the parameter i is set to the cylinder number of the cylinder for which the peak value is detected. For example, if it is timing for detecting the peak value of the No. 3 cylinder (step 211), the value of i is set to 3 (step 213). If the crank angle CA does not agree with the timing for detecting the peak value of any cylinder, the operation terminates immediately without performing steps 219 through 225.

If it is the timing for detecting the peak value of any of the cylinders at steps through 203 through 217, the output Vpeak of the peak-hold circuit is read at step 219 and stored as $Vpeak_i$ at step 221 (i.e., $Vpeak_i$ represents the peak value of the No. i cylinder).

At step 223, the new background noise $BG_i$ of the No. i cylinder is calculated as a weighted mean value of the $Vpeak_i$ and the present background noise $BG_i$ of the No. i cylinder, i.e., the background noise $BG_i$ is renewed.

Further, at step 225, the nondimensional noise value $NVACT_i$ of the No. i cylinder is calculated in accordance with the peak value $Vpeak_i$ detected at step 221 and the background noise $BG_i$ calculated at step 223 by $NVACT_i = Vpeak_i/BG_i$.

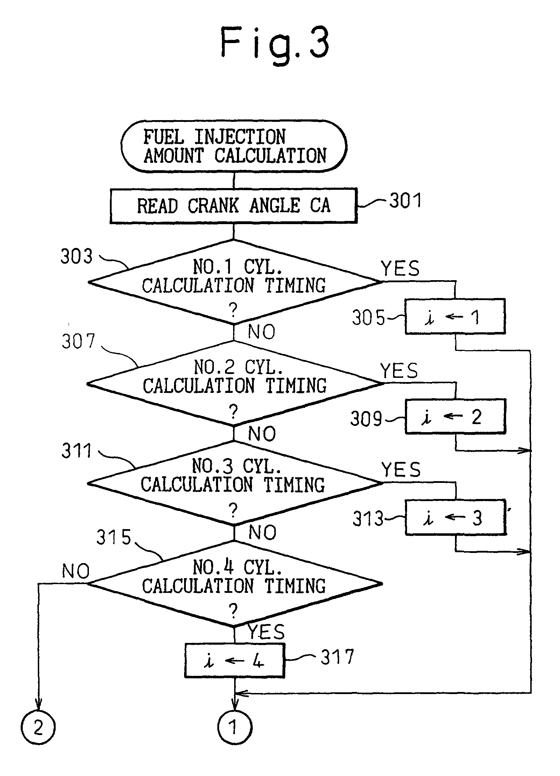

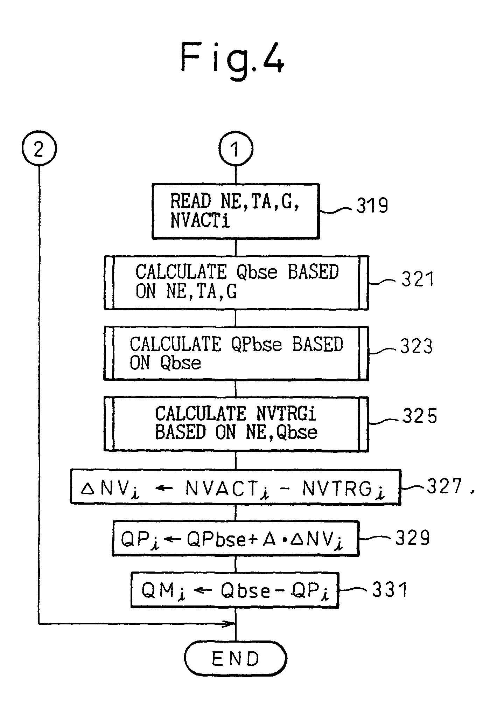

Figs. 3 and 4 are a flowchart illustrating the fuel injection amount calculating operation based on the peak values $Vpeak_i$ of the respective cylinders.

Steps 301 through 317 represent the operation for determining timing for calculating the fuel injection amount which are similar to the operation of steps 201 through 217 in Fig. 2. At steps 301 through 307, if it is the timing for calculating the fuel injection amount of any of the cylinders No. 1 to No. 4, the value of the parameter i is set to the cylinder number (i = 1, 2, 3, 4) of the cylinder for which the fuel injection amount is calculated. If no cylinder is at the timing for calculating the fuel injection amount, the operation terminates without performing steps 319 through 331.

After setting the value of the parameter i, the operation performs step 319 in Fig. 4 to read the engine speed NE, the accelerator signal TA and the intake air amount G and $NVACT_i$ of No. 1 cylinder.

At step 321, the basic fuel injection amount $Q_{bse}$ is determined in accordance with NE, TA and G read 'in at step 319. The values of $Q_{bse}$ are stored in the ROM of the ECU 20 in the form of a numerical table using NE, TA and G as parameters and $Q_{bse}$ is determined from this numerical table at step 321.

At step 323, the basic pilot fuel injection amount $QP_{bse}$ is determined in accordance with the basic fuel injection amount $Q_{bse}$ and the engine speed NE. The basic pilot fuel injection amount $QP_{bse}$ is a pilot fuel injection amount which minimizes combustion noise of the engine without causing deterioration of the exhaust gas emission under a standard operating condition of the engine. The values of $QP_{bse}$ were previously determined by experiment and stored in the ROM of the ECU 20 in the form of a numerical table using $Q_{bse}$ and NE as parameters. $QP_{bse}$ is determined from this numerical table at step 323 using the calculated $Q_{bse}$ and NE. The values of $Q_{bse}$ and $QP_{bse}$ are common to all the cylinders No. 1 to No. 4.

At step 325, the target noise value $NVTRG_i$ of the No. i cylinder is determined in accordance with the basic fuel injection amount $Q_{bse}$ and the engine speed NE in the manner similar to step 323. Similarly to the basic pilot fuel injection amount $QP_{bse}$, the target noise values $NVTRG_i$ of the respective cylinders were obtained previously by experiment and stored in the ROM of the ECU 20 in the form of a numerical table using $Q_{bse}$ and NE as parameters. As explained before, the target noise values $NVTRG_i$ are minimum noise values which can be obtained under various combinations of $Q_{bse}$ and NE without causing deterioration of the exhaust gas emission.

After setting the target noise value $NVTRG_i$ of the No. i cylinder, the difference $\Delta NV_i$ between the actual noise value $NVACT_i$ and the target noise value $NVTRG_i$ of the No. i cylinder is calculated by $\Delta NV_i = NVACT_i - NVTRG_i$. Further, at step 329, the basic pilot fuel injection amount $QP_{bse}$ is corrected to obtain the actual pilot fuel injection amount $QP_i$ of the No. i cylinder. In this embodiment, the basic pilot fuel injection amount $Q_{bse}$ is corrected by the amount proportional to the value of $\Delta NV_i$, namely, $QP_i$ of the respective cylinders are calculated by $QP_i = QP_{bse} + A \times \Delta NV_i$ (A is a constant determined by experiment).

At step 331, the main fuel injection amount $QM_i$ is calculated by $QM_i = Q_{bse} - QP_i$. Therefore, the sum of the pilot fuel injection amount $QP_i$ and the main fuel injection amount $QM_i$ (the total fuel injection amount) are always becomes the same as the basic fuel injection amount $Q_{bse}$ regardless of the difference in the cylinders in this comparative example, thereby the variation of torque among the cylinders does not occur.

As explained above, according to the comparative example, combustion noises of the cylinders of the engine can be suppressed without causing the variation of torque among the cylinders.

Next, an embodiment of the present invention will be explained.

In the previous embodiment, the total fuel injection amounts of the respective cylinders are set at a same value in order to prevent the variation of torque in the cylinders. However, in the actual engine, the torque generated by the respective cylinders are slightly different to each other even if the total fuel injection amounts are the same due to other factors such as slight differences of the fuel injection timing in the respective cylinders. Therefore, a slight variation of torque among the cylinders may occur even if the total fuel injection amounts are adjusted to a same value.

In order to prevent the variation of torque in the cylinders, the present embodiment detects the torque generated by the respective cylinders and corrects the total fuel injection amount so that the generated torques of the respective cylinders become the same.

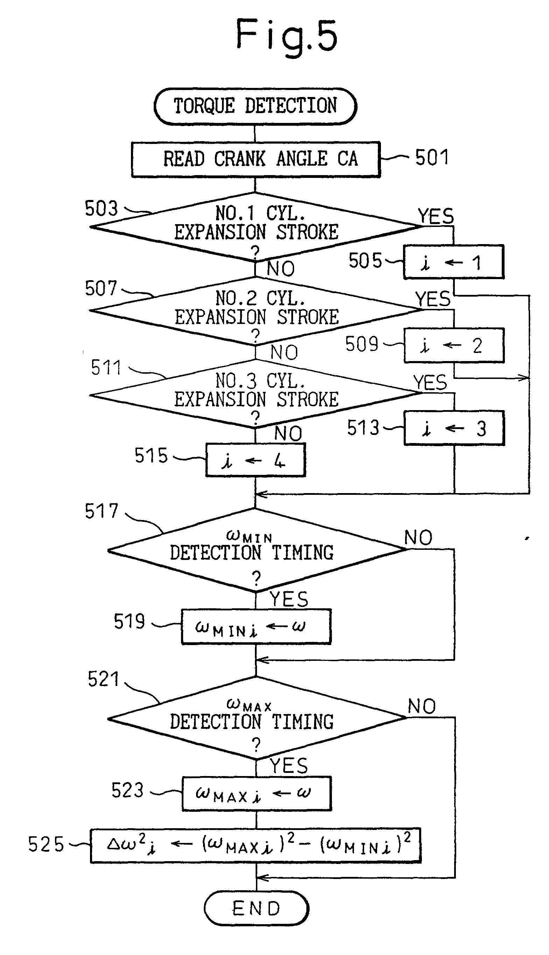

Figs. 5 through 7 illustrates the suppressing operation of the torque variation according to the present embodiment.

Fig. 5 is a flowchart explaining the detecting operation of the torque generated by the respective cylinders. This operation is performed by a routine executed by the ECU 20 at regular intervals.

In the operation in Fig. 5, the highest rotating speeds $\omega_{MAX\,i}$ of the crankshaft during the expansion strokes of the respective cylinders (for example, the rotating speeds of the crankshaft at 90 degree CA after the top dead centers of the expansion strokes of the respective cylinders) and the lowest rotating speed $\omega_{MIN\,i}$ of the crankshaft during the expansion strokes of the respective cylinders (for example, the rotating speeds of the crankshaft at the top dead centers of the expansion strokes of the respective cylinders) are detected. Further, the difference $\Delta\omega^2_i$ between the squares of $\omega_{MAX\,i}$ and $\omega_{MIN\,i}$ ($\Delta\omega^2_i = (\omega_{MAX\,i})^2 - (\omega_{MIN\,i})^2$) is used as a parameter representing the torque generated by the cylinders. Since the value of $\Delta\omega^2_i$ represents the kinetic energy generated by the combustion in the cylinder and is transferred to the rotating parts of the engine, the value $\Delta\omega^2_i$ can be used as the parameter representing the torque generated by the respective cylinders.

In Fig. 5, the cylinder number i is determined at steps 501 through 505. Namely, the present crank angle CA is read in at step 501 and, at steps 503 through 515, it is determined whether any of the cylinders No. 1 to No. 4 is in the expansion stroke. The value of the parameter i is set to the cylinder number in the expansion stroke.

After determining the value of i, the operation determines whether the present crank angle is at the timing for detecting the lowest speed $\omega_{MIN\,i}$ of the determined cylinder (i.e., at near the top dead center of the expansion stroke of the No. 1 cylinder). If it is the timing for detecting $\omega_{MIN\,i}$, the operation stores the present rotating speed $\omega$ of the crank shaft as $\omega_{MIN\,i}$ at step 519.

If it is not the timing for detecting $\omega_{MIN\,i}$, the

operation executes step 521 to determine whether it is the timing for detecting the highest speed $\omega_{MAX\,i}$ (i.e., about 90 degree after the top dead center of the expansion stroke of the No. 1 cylinder). If it is the timing for detecting $\omega_{MAX\,i}$, the present rotating speed of the crankshaft is stored as $\omega_{MAX\,i}$ at step 523. If it is not the timing for detecting either of $\omega_{MAX\,i}$ and $\omega_{MAX\,i}$, the operation terminates immediately after executing step 521.

After detecting both of the lowest speed $\omega_{MIN\,i}$ and the highest speed $\omega_{MAX\,i}$, the operation calculates the torque parameter $\Delta\omega^2_i$ of the No. i cylinder by

$$\Delta\omega_i^2 = (\omega_{MAX\,i})^2 - (\omega_{MIN\,i})^2 \text{ at step 525.}$$

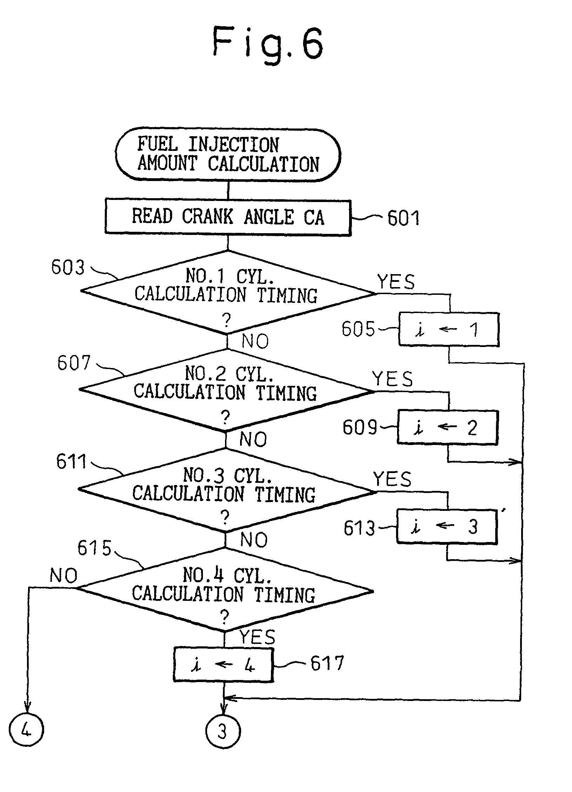

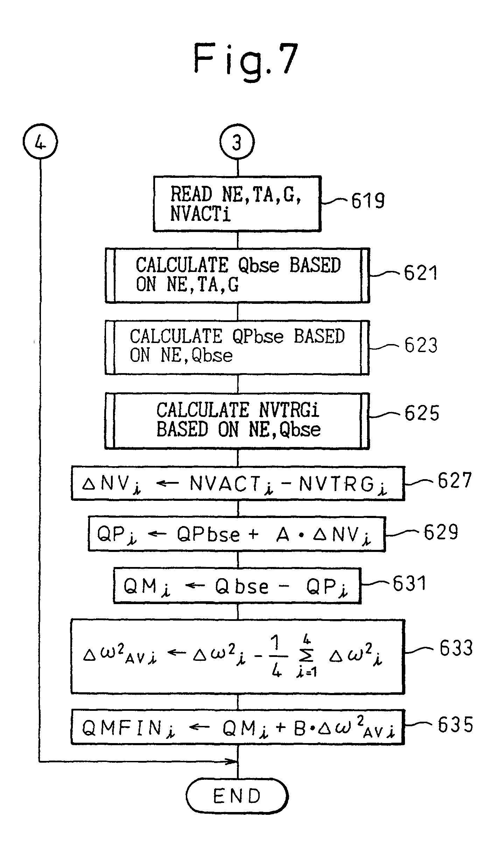

Figs. 6 and 7 are a flowchart explaining the fuel injection amount calculation which reduces the variation of the torque among the cylinders. In this operation, the main fuel injection amount $QM_i$ is corrected in accordance with the torque parameter $\Delta\omega^2_i$.

In Fig. 6, steps 601 through 617 in Fig. 6 and the steps 619 through 631 in Fig. 7 represent the operations same as those in steps 301 through 307 in Fig. 3 and steps 319 through 331 in Fig. 4, respectively.

Namely, at these steps, the pilot fuel injection amounts $QP_i$ and the main fuel injection amounts $QM_i$ are calculated in the manner same as the embodiment in Figs. 2 through 4. However, in this embodiment, the calculated main fuel injection amounts $QM_i$ are further corrected at steps 633 and 635 in such a manner that the values of the torque parameter $\Delta\omega^2_i$ of the respective cylinders become the same value.

Namely, at step 633, the difference $\Delta\omega^2_{AVi}$ between the value of the torque parameter $\Delta\omega^2_i$ of the No. i cylinder and the average of the values of the torque parameter of the No. 1 through No. 4 cylinders are calculated by $\Delta\omega^2_{AVi} = \Delta\omega^2_i - (1/4) \times (\Delta\omega^2_1 + \Delta\omega^2_2 + \Delta\omega^2_3 + \Delta\omega^2_4)$. Further, at step 635, the corrected main fuel injection amount $QMFIN_i$ is calculated by correcting the main fuel injection amount $QM_i$ of the No. i cylinder in accordance with the value of $\Delta\omega^2_{AVi}$. In this embodiment, the corrected main fuel injection amount $QMFIN_i$ is calculated by $QMFIN_i = QM_i + B \times \Delta\omega^2_{AVi}$ (B is a constant determined by experiments). By setting the main fuel injection amount of the No. i cylinder (i = 1, 2, 3, 4) at $QMFIN_i$, the torque $\Delta\omega^2_i$ generated by the each cylinder becomes the same as the average torque $\omega^2_{AVi}$ of all the cylinders. Thus, the even a slight variation of the torques of the cylinders does not occur.

Combustion noises of the respective cylinders (1, 2, 3, 4) of the engine (10) are detected by a combustion noise sensor (15). An electronic control unit (ECU) (20) performs pilot fuel injections prior to main fuel injections to the respective cylinders through fuel injection valves (10a, 10b, 10c, 10d) and adjusts the pilot fuel injection amounts of the respective cylinders so that the combustion noises of the respective cylinders detected by the combustion noise sensor (15) are reduced. Further, the ECU (20) corrects the fuel injection amounts of the respective cylinders in accordance with the pilot fuel injection amounts of the respective cylinders in such a manner that the sum of the fuel injection amount and the pilot fuel injection amount becomes a same value in each cylinder. Since the total amount of fuel supplied to each cylinder becomes the same, the variation of torque among the cylinders does not occur.

## Claims

1. A fuel injection control device for an internal combustion engine (10) having a plurality of cylinders (1, 2, 3, 4) comprising means (15) for detecting combustion noises of the respective cylinders of the engine, pilot fuel injection amount correcting means (20) for correcting the amounts of pilot fuel injected into the respective cylinders of the engine prior to main fuel injections in accordance with the detected combustion noises of the respective cylinders, the fuel injection control device further comprises main fuel injection amount correcting means (20) for correcting the amounts of the main fuel injections of the respective cylinders in accordance with the corrected amounts of the pilot fuel injections of the respective cylinders,
**characterized in that**
the fuel injection control device further comprises torque detecting means (20) for detecting output torques generated by the respective cylinders (1, 2, 3, 4) and torque control means for correcting the total amounts of the main fuel injections and the pilot fuel injections of the respective cylinders in such a manner that output torques generated by the respective cylinders become the same value.

2. A fuel injection control device as set forth in claim 1, wherein the main fuel injection amount correcting means (20) corrects the amounts of the fuel injection of the respective cylinders (1, 2, 3, 4) in such a manner that the amount of the main fuel injection of a cylinder is decreased when the amount of the pilot fuel injection of said cylinder is increased by the pilot fuel injection amount correcting means (20) and the amount of the main fuel injection of said cylinder is increased when the amount of the pilot fuel injection of said cylinder is decreased by the pilot fuel injection amount correcting means (20).

3. A fuel injection control device as set forth in claim 2, wherein the main fuel injection amount correcting means (20) corrects the amounts of the fuel injections of the respective cylinders (1, 2, 3, 4) in such a manner that the sum of the amount of the correction of the pilot fuel injection and the amount of the correction of the main fuel injection becomes zero in each cylinder.

## Patentansprüche

1. Kraftstoffeinspritzsteuerungsvorrichtung für eine Brennkraftmaschine (10) mit mehreren Zylindern (1, 2, 3, 4) umfassend: eine Einrichtung (15) zur Erfassung von Verbrennungsgeräuschen der entsprechenden Zylinder des Motors, eine Pilotkraftstoffeinspritzmengen-Berichtungseinrichtung (20) zur Berichtigung der in die entsprechenden Zylinder des Motors vor den Hauptkraftstoffeinspritzungen eingespritzten Pilotkraftstoffmengen entsprechend den erfaßten Verbrennungsgeräuschen der entsprechenden Zylinder, wobei die Kraftstoffeinspritzsteuerung weiter eine Hauptkraftstoffeinspritzmengen-Berichtigungseinrichtung zur Berichtigung der Mengen der Hauptkraftstoffeinspritzungen der entsprechenden Zylinder entsprechend den berichtigten Mengen der Pilotkraftstoffeinspritzungen der entsprechenden Zylinder umfaßt,
**dadurch gekennzeichnet, dass**
die Kraftstoffeinspritzsteuerungsvorrichtung weiter eine Drehmomenterfassungseinrichtung (20) zur Erfassung der von den entsprechenden Zylindern (1, 2, 3, 4) erzeugten Ausgangsdrehmomenten und eine Drehmomentsteuerungsvorrichtung zur Berichtigung der Gesamtmengen der Hauptkraftstoffeinspritzungen und der Pilotkraftstoffeinspritzungen der entsprechenden Zylinder derart, dass die von den entsprechenden Zylindern erzeugten Ausgangsdrehmomente gleichwertig werden, umfaßt.

2. Kraftstoffeinspritzsteuerungsvorrichtung nach Anspruch 1, wobei die Haupkraftstoffeinspritzmengen-Berichtigungseinrichtung (20) die Mengen der Kraftstoffeinspritzungen der entsprechenden Zylinder (1, 2, 3, 4) so berichtigt, dass die Menge der Hauptkraftstoffeinspritzung eines Zylinders vermindert wird, wenn die Menge der Pilotkraftstoffeinspritzung des Zylinders mittels der Pilotkraftstoffeinspritzmengen-Berichtigungseinrichtung (20) erhöht wird, und die Menge der Hauptkraftstoffeinspritzung des Zylinders erhöht wird, wenn die Menge der Pilotkraftstoffeinspritzung des Zylinders mittels der Pilotkraftstoffeinspritzmengen-Berichtigungseinrichtung (20) vermindert wird.

3. Kraftstoffeinspritzsteuerungsvorrichtung nach Anspruch 2, wobei die Hauptkraftstoffeinspritzmengen-Berichtigungseinrichtung (20) die Mengen der Kraftstoffeinspritzungen der entsprechenden Zylinder (1, 2, 3, 4) so berichtigt, dass die Summe der Mengen der Berichtigung der Pilotkraftstoffeinspritzung und die Menge der Berichtigung der Hauptkraftstoffeinspritzung in jedem Zylinder Null wird.

in each cylinder.

**Revendications**

1. Dispositif de commande d'injection de carburant pour un moteur à combustion interne (10) comportant une pluralité de cylindres (1, 2, 3, 4) comprenant un moyen (15) destiné à détecter les bruits de combustion des cylindres respectifs du moteur, un moyen de correction de quantité d'injection de carburant pilote (20) destiné à corriger les quantités de carburant pilote injectées dans les cylindres respectifs du moteur avant les injections de carburant principales conformément aux bruits de combustion détectés des cylindres respectifs, le dispositif de commande d'injection de carburant comprend de plus un moyen de correction de quantité d'injection de carburant principale (20) destiné à corriger les quantités des injections de carburant principales des cylindres respectifs conformément aux quantités corrigées des injections de carburant pilotes des cylindres respectifs,

   **caractérisé en ce que**

   le dispositif de commande d'injection de carburant comprend de plus un moyen de détection de couple (20) destiné à détecter les couples de sortie générés par les cylindres respectifs (1, 2, 3, 4) et un moyen de commande de couple destiné à corriger les quantités totales d'injections de carburant principales et d'injections de carburant pilotes des cylindres respectifs d'une manière telle que les couples de sortie générés par les cylindres respectifs deviennent de la même valeur.

2. Dispositif de commande d'injection de carburant selon la revendication 1, dans lequel le moyen de correction de quantité d'injection de carburant principale (20) corrige les quantités d'injections de carburant des cylindres respectifs (1, 2, 3, 4) d'une manière telle que la quantité d'injection de carburant principale d'un cylindre diminue lorsque la quantité de l'injection de carburant pilote dudit cylindre est augmentée par le moyen de correction de quantité d'injection de carburant pilote (20) et la quantité de l'injection de carburant principale dudit cylindre est augmentée lorsque la quantité de l'injection de carburant principale dudit cylindre est diminuée par le moyen. de correction de quantité d'injection de carburant pilote (20).

3. Dispositif de commande d'injection de carburant selon la revendication 2, dans lequel le moyen de correction de quantité d'injection de carburant principale (20) corrige les quantités des injections de carburant des cylindres respectifs (1, 2, 3, 4) d'une manière telle que la somme de la quantité de correction d'injection de carburant pilote et de la quantité de correction d'injection de carburant principale devient nulle dans chaque cylindre.

Fig.1

EP 0 921 296 B1

# Fig.2

NOISE VALUE CALCULATION

READ CRANK ANGLE CA — 201

203 — NO.1 CYL. DETECTION TIMING ? — YES → 205 $i \leftarrow 1$

NO

207 — NO.2 CYL. DETECTION TIMING ? — YES → 209 $i \leftarrow 2$

NO

211 — NO.3 CYL. DETECTION TIMING ? — YES → 213 $i \leftarrow 3$

NO

215 — NO.4 CYL. DETECTION TIMING ? — NO

YES

$i \leftarrow 4$ — 217

READ Vpeak — 219

$Vpeak_i \leftarrow Vpeak$ — 221

$$BG_i \leftarrow \frac{(K-1)BG_i + Vpeak_i}{K}$$ — 223

$NVACT_i \leftarrow Vpeak_i / BG_i$ — 225

END

# Fig.3

```
                    ┌─────────────────────────┐
                    │    FUEL INJECTION        │
                    │  AMOUNT CALCULATION      │
                    └─────────────────────────┘
                                 │
                    ┌─────────────────────────┐
                    │   READ CRANK ANGLE CA    │──── 301
                    └─────────────────────────┘
                                 │
        303                      ◇
          ╲            ╱  NO.1 CYL.  ╲        YES
           ─── ◇  CALCULATION TIMING ◇ ──────────┐
                ╲         ?          ╱            │
                 ╲──────────────────╱    305 ──┌─────────┐
                         │ NO              │ i ← 1 │
        307              │                      └─────────┘
          ╲            ◇                            │
           ─── ◇  NO.2 CYL.         ◇        YES    │
                ╲  CALCULATION TIMING         ──────┐
                 ╲        ?         ╱            │  │
                  ╲─────────────────╱   309 ──┌─────────┐
                         │ NO              │ i ← 2 │
        311              │                      └─────────┘
          ╲            ◇                            │
           ─── ◇  NO.3 CYL.         ◇        YES    │
                ╲  CALCULATION TIMING         ──────┐
                 ╲        ?         ╱            │  │
                  ╲─────────────────╱   313 ──┌─────────┐
                         │ NO              │ i ← 3 │
        315              │                      └─────────┘
          ╲            ◇                            │
    NO  ──── ◇  NO.4 CYL.          ◇                │
            │   ╲  CALCULATION TIMING              │
            │    ╲        ?         ╱               │
            │     ╲─────────────────╱               │
            │             │ YES                     │
            │       ┌─────────┐                     │
            │       │ i ← 4   │──── 317             │
            │       └─────────┘                     │
            │             │                         │
           (2)           (1) ◄─────────────────────┘
```

# Fig.4

②        ①

| READ NE,TA,G, NVACTi | 319 |

| CALCULATE Qbse BASED ON NE,TA,G | 321 |

| CALCULATE QPbse BASED ON Qbse | 323 |

| CALCULATE NVTRGi BASED ON NE,Qbse | 325 |

$$\triangle NV_i \leftarrow NVACT_i - NVTRG_i \qquad 327.$$

$$QP_i \leftarrow QPbse + A \cdot \triangle NV_i \qquad 329$$

$$QM_i \leftarrow Qbse - QP_i \qquad 331$$

END

# Fig.5

```
         ┌────────────────────────┐
         │    TORQUE DETECTION    │
         └────────────────────────┘
                     │
         ┌────────────────────────┐
         │  READ CRANK ANGLE CA   │──── 501
         └────────────────────────┘
                     │
503 ─────◇  NO.1 CYL.          ◇ ──── YES ──┐
         ◇ EXPANSION STROKE ?  ◇            │
              │ NO            505 ── │ i ← 1 │
                                     └───────┘
507 ─────◇  NO.2 CYL.          ◇ ──── YES ──┐
         ◇ EXPANSION STROKE ?  ◇            │
              │ NO           509 ── │ i ← 2 │
                                     └───────┘
511 ─────◇  NO.3 CYL.          ◇ ──── YES ──┐
         ◇ EXPANSION STROKE ?  ◇            │
              │ NO           513 ── │ i ← 3 │
                                     └───────┘
  515 ──┤ i ← 4 │
         │
517 ─────◇   ω_MIN                ◇ ──── NO ──┐
         ◇ DETECTION TIMING ?     ◇           │
              │ YES                            │
 519 ──┤ ω_MINi ← ω │                          │
         │←─────────────────────────────────┘
517      │
521 ─────◇   ω_MAX                ◇ ──── NO ──┐
         ◇ DETECTION TIMING ?     ◇           │
              │ YES                            │
 523 ──┤ ω_MAXi ← ω │                          │
         │                                     │
 525 ──┤ Δω²i ← (ω_MAXi)² − (ω_MINi)² │        │
         │←─────────────────────────────────┘
         ┌────────┐
         │  END   │
         └────────┘
```

$\omega_{MIN}$ DETECTION TIMING ?

$519 \quad \omega_{MIN i} \leftarrow \omega$

$\omega_{MAX}$ DETECTION TIMING ?

$523 \quad \omega_{MAX i} \leftarrow \omega$

$525 \quad \Delta\omega^2{}_i \leftarrow (\omega_{MAX i})^2 - (\omega_{MIN i})^2$

# Fig.6

FUEL INJECTION
AMOUNT CALCULATION

READ CRANK ANGLE CA —601

603 — NO.1 CYL. CALCULATION TIMING ? —YES→ 605— $i \leftarrow 1$

NO

607 — NO.2 CYL. CALCULATION TIMING ? —YES→ 609— $i \leftarrow 2$

NO

611 — NO.3 CYL. CALCULATION TIMING ? —YES→ 613— $i \leftarrow 3$

NO

615 — NO.4 CYL. CALCULATION TIMING ?

NO

YES

$i \leftarrow 4$ —617

(4)   (3)

# Fig.7

READ NE,TA,G, NVACTi ~ 619

CALCULATE Qbse BASED ON NE,TA,G ~ 621

CALCULATE QPbse BASED ON NE,Qbse ~ 623

CALCULATE NVTRGi BASED ON NE,Qbse ~ 625

$\Delta NV_i \leftarrow NVACT_i - NVTRG_i$ ~ 627

$QP_i \leftarrow QPbse + A \cdot \Delta NV_i$ ~ 629

$QM_i \leftarrow Qbse - QP_i$ ~ 631

$\Delta \omega^2_{AVi} \leftarrow \Delta \omega^2_i - \dfrac{1}{4} \sum_{i=1}^{4} \Delta \omega^2_i$ ~ 633

$QMFIN_i \leftarrow QM_i + B \cdot \Delta \omega^2_{AVi}$ ~ 635

END